# EUROPEAN PATENT SPECIFICATION

(11) **EP 3 343 713 B1**
(45) Date of publication and mention of the grant of the patent: **14.10.2020**
(21) Application number: 17211098.3
(22) Date of filing: 29.12.2017
(51) Int. Cl.: H02G 3/08

(54) **ELECTRICAL JUNCTION BOX**
STROMVERTEILERKASTEN
BOÎTE DE DÉRIVATION ÉLECTRIQUE

(30) Priority: 30.12.2016 IT 201600132538
(43) Date of publication of application: 04.07.2018
(73) Proprietor: Euro 2000 S.R.L., 20083 Gaggiano, Frazione Vigano MI (IT)
(72) Inventor: GUAGLIONE, Angelo, 20088 Gudo Visconti MI (IT)
(74) Representative: Modiano, Micaela Nadia

(56) References cited:
- US-A- 3 634 598
- US-A- 3 927 249
- English Rose Systemtechnik Gmbh: "Ex-EQUIPMENT", , 31 August 2012 (2012-08-31), XP055405815, Retrieved from the Internet: URL:http://rose-enclosures.co.uk/cat/Rose- Ex-Equipment.pdf [retrieved on 2017-09-12]
- English Rose Systemtechnik Gmbh: "EX Polyester Okta Box", , 12 September 2012 (2012-09-12), XP055582097, Retrieved from the Internet: URL:http://www.asp-electro-tech.co.uk/uplo ads/products-pdfs/135/20140730125604-Rose% 20-%20Ex%20Oktabox%20Range.pdf [retrieved on 2019-04-17]

## Description

The present invention relates to an electrical junction box.

These devices usually comprise a box-like body provided with at least two flanges for coupling with terminals of electrical wires: the electrical wires (single- or multiple-phase) that lead to the same junction box are coupled to the flanges in order to prevent their accidental extraction, for example by means of connectors which are threaded and mutually connected electrically so as to provide the desired electrical circuit.

Two main categories of products are known in the field of junction boxes: plastic boxes and metal ones; it is noted that the wires that lead to the box may be provided with insulating connectors (made of plastic) or electrically conducting connectors (made of metal): in this last case, the connector is often connected electrically, for example to an electrical grounding circuit or to a neutral or even to a phase of the same wire (in this last situation the conducting part is often protected with a suitable insulating element).

Insulating plastic junction boxes are unable by themselves to provide an electrical connection between the connector (if metallic) of a wire and the one of another wire and the connections must be performed manually by the operator during installation.

Metal junction boxes, instead, despite being capable of allowing electrical connection between the metallic connectors of the various wires, have higher costs and are more difficult to manifacture than the former.

An inevitable consequence of this is that plastic junction boxes are typically used in certain applications while metal junction boxes are used in others; this forces the user (consider for example a professional installation technician) to have both types in stock.

English Rose Systemtechnik Gmbh: "Ex-Equipment ", 31 August 2012, US 3927249 and US 3634598 disclose an electrical junction box wherein the flanges are not internally threaded and wherein the coupling element is not in contact with the threads of the coupling portion.

The aim of the present invention is to provide an electrical junction box that solves the technical problem described above and obviates the drawbacks and overcomes the limitations of the background art, allowing to have available a single type of junction box which has high flexibility in application and allows electrical connection between the connectors of the electrical wires that lead to it together with a modest manufacturing cost and a high safety and simplicity of installation.

Within this aim, an object of the present invention is to provide an electrical junction box that is a valid alternative to known electrical junction boxes.

A further object of the invention is to provide an electrical junction box that is capable of giving the greatest assurances of reliability and safety in use.

This aim, as well as these and other objects which will become better apparent hereinafter, are achieved by an electrical junction box as defined in claim 1

A still further object of the invention is a combination of an electrical junction box according to the invention and of at least two electrical wires which are provided with coupling terminals adapted to couple to the flanges, said coupling terminals being at least partly electrically conducting, in particular conducting at least at a part thereof which, in the assembled condition, is in contact with a connecting element of the electrical junction box.

Further characteristics and advantages of the invention will become better apparent from the description of a preferred but not exclusive embodiment of an electrical junction box, illustrated by way of non limiting example with the aid of the accompanying drawings, wherein:
Figure 1 is a perspective view of an embodiment of a junction box according to the invention, without the cover;

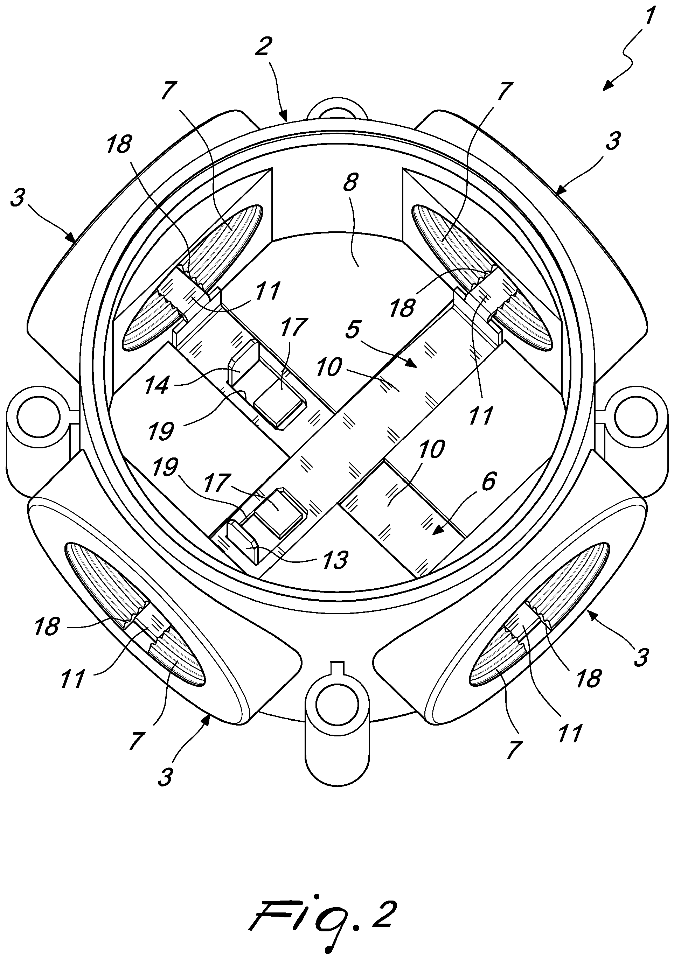

Figure 2 is a perspective view of the junction box of the preceding figure, without a covering wall of the bottom wall;
Figure 3 is a transverse sectional view of the junction box according to the invention;

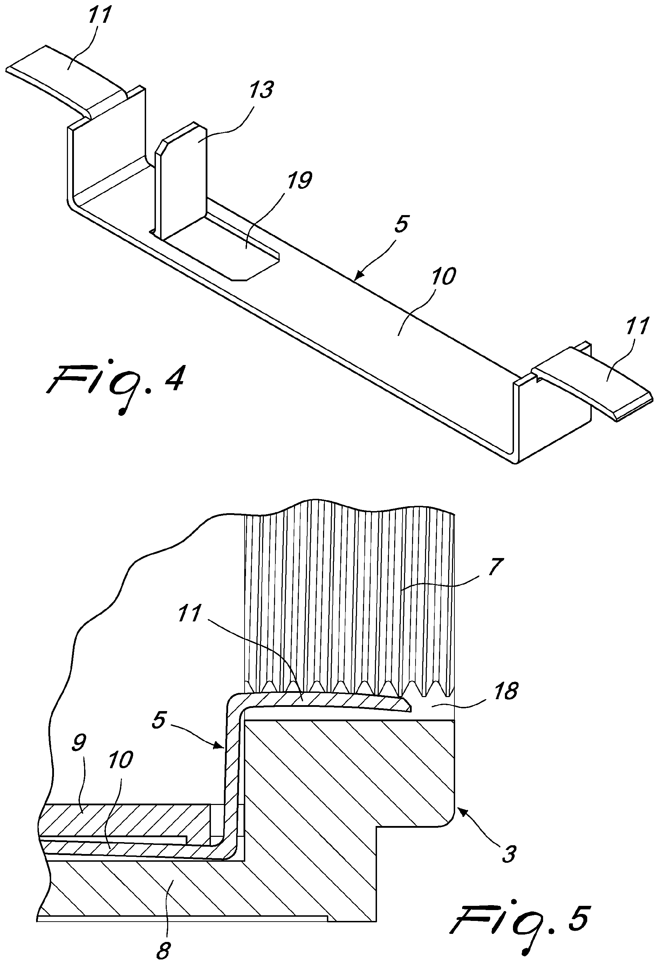

Figure 4 is a perspective view of a detail of the junction box of the preceding figures;
Figure 5 is a sectional view of an enlarged-scale detail of the junction box of the preceding figures.

With reference to the figures, the electrical junction box, designated generally by the reference numeral 1, comprises a box-like body 2 made of electrically insulating material, preferably plastic, even more preferably polyamide PA6.

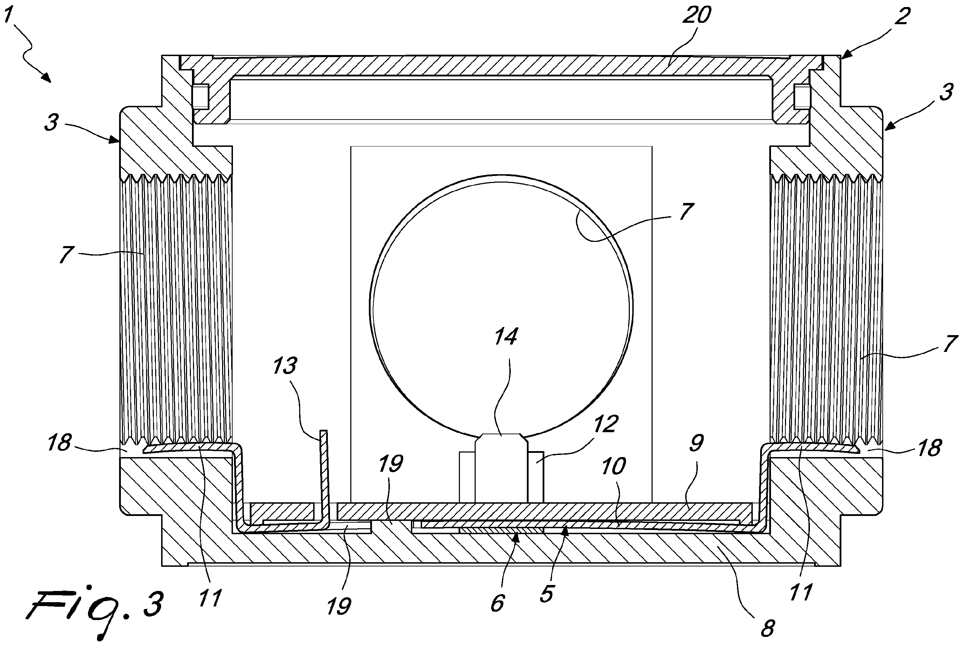

The box-like body 2 is provided with a cover 20 that is designed to close it and is visible in Figure 3; the cover 20 can be fixed detachably to the body, for example by means of a snap coupling, a screw coupling or with dedicated fixing screws.

Furthermore, the junction box 1 comprises, in the non-limiting embodiment, four coupling flanges 3 which are designed, during use, to be coupled to coupling terminals of electrical wires; more generally, it is worth noting right now that the flanges 3 might be two or more.

According to the invention, the junction box 1 further comprises two connecting elements 5, 6 which conduct electric current, are extended between the flanges 3 and connect them electrically.

In this manner, even if the body 2 is electrically insulating, it is possible to maintain the electrical continuity between the coupling terminals of the electrical wires which in the installed condition are coupled to the flanges 3.

As regards the wire coupling terminals, they are not shown in the accompanying figures, but they might be entirely conducting or at least partly conducting, in particular at least conducting at the part of the terminals that is seated in the flange in the assembled condition.

Although in the illustrated embodiment there are two connecting elements 5, 6, in other variations only one is provided, especially when there are only two or three flanges 3.

According to the invention, the flanges 3 are provided with at least one internally threaded tubular coupling portion 7 and the connecting element 5, 6 is extended at least close to the portion 7 in order to generate an electrical contact with a coupling terminal which, in the installed condition, is screwed into the tubular coupling portion 7.

In a variation which is not shown, for example, the connecting element 5, 6 is extended frontally to the tubular coupling portion 7 and inside the body 2, so as to ensure that an axial electrical contact with the coupling terminal of the wire is created.

According to the invention, instead, a radial electrical contact is generated between the coupling terminal of the wire and the connecting element 5, 6, as will be described better hereinafter.

According to the invention, in fact, the connecting element 5 (or 6) is provided with a body portion 10 and with at least two ends 11, 12 which are extended at the threaded tubular coupling portion 7.

In this manner, the electrical contact that is generated with the coupling terminals of the electrical wires (which are screwed in the tubular coupling portion 7) is radial and occurs at a plurality of points (substantially one contact point for each affected thread), improving overall electrical conduction.

For this purpose, preferably, the threaded portion 7 is provided with an accommodation groove 18 which accommodates a corresponding end 11 or 12.

In some embodiments, the body 10 of the connecting element 5 (or 6) is insulated, so as to avoid short-circuits, for example covered with an insulating sheath.

In the illustrated embodiment, instead, the box-like body 2 comprises a bottom wall 8 and a wall 9 for covering the bottom wall; the covering wall 9 is electrically insulating and is arranged so as to be substantially coplanar and superimposed on the bottom wall 8, as more clearly visible in Figure 3, in order to insulate the body 10 of the connecting element 5 (or 6) that is interposed between the bottom wall 8 and the covering wall 9.

In the illustrated embodiment, the two connecting elements 5 and 6 are substantially shaped like metallic laminas (for example, copper, brass, or the like) which are elongated and folded, so as to define the body portions 10 and the ends 11.

If, as in the illustrated embodiment, there are four coupling flanges 3, they are arranged preferably in pairs so as to face each other, one for each side of the body 2, and there are two connecting elements 5 and 6, each extended between two mutually facing flanges; the connecting elements 5 and 6 therefore mutually intersect and in the intersection region they are preferably arranged in mutual contact, so as to preserve electrical continuity.

In other variations, not shown, the connecting elements 5 and 6 instead are not in mutual contact: in this manner, the electrical connection is provided only between two mutually facing flanges 3.

In yet other variations, there is only a single connecting element from which direct branches extend which are connected electrically to the flanges 3, in a manner similar to what has been explained above.

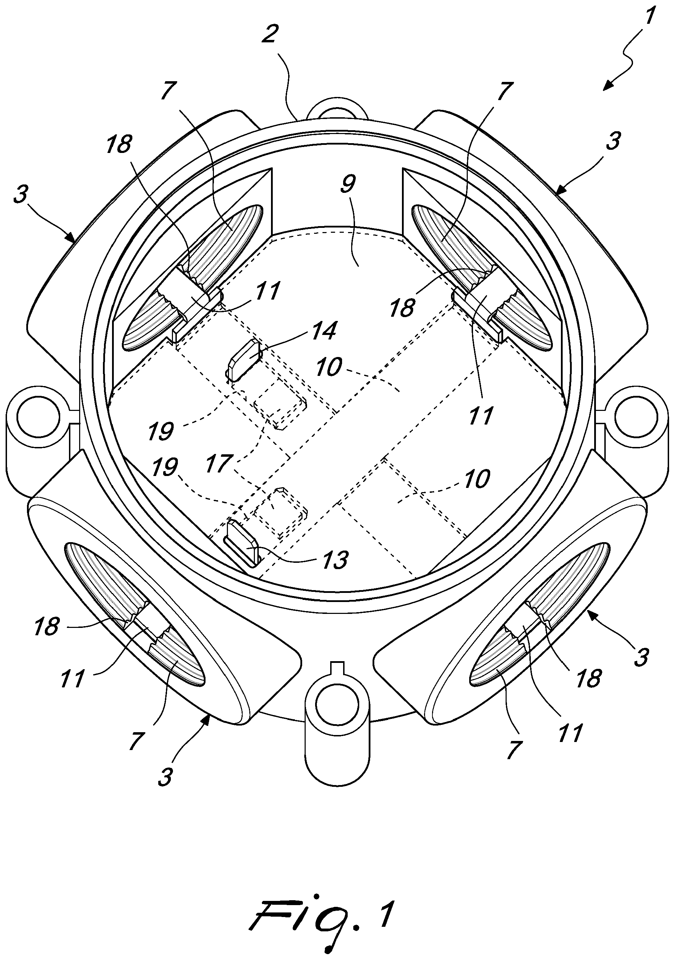

According to an improvement, at the body portion 10 there is an additional free terminal 13, which protrudes substantially at right angles from said body portion 10; the covering wall 9, in a position that substantially coincides with the position of the supplemental free terminal 13, is provided with a passage opening, which allows the additional free terminal 13 to protrude inside the volume of the box-like body 2, as is evident for example in Figure 1.

This solution is particularly useful when one wishes to place in electrical contact an additional wire (not shown) or one wishes to provide electrical connections inside the junction box 1, using for example female blade-like connectors, for example of the Faston® type, or the like.

Advantageously, in order to obtain the connecting element 5 or 6 from a single metallic lamina, the additional free terminal 13 is provided by cutting and bending a corresponding body portion 10; as a consequence of this operation, a window 19, which has a shape and dimensions which are complementary to those of the additional free terminal 13, is free on the body 10; the window 19 can be used advantageously to provide a coupling with an underlying blocking protrusion 17 which protrudes from the bottom wall 8 toward the inside of the box-like body 2.

In some embodiments, the connecting elements 5 and 6 are co-molded with the body 2, further simplifying the manufacturing operations and strengthening the entire assembly.

In some embodiments, the covering wall 9 is welded, at its peripheral edges, preferably by ultrasound welding, to the body 2; in this manner accidental disassembly, which might release the connecting elements 5 and 6, is prevented.

The operation of the electrical junction box 1 is clear and evident from what has been described.

In practice it has been found that the electrical junction box according to the present invention achieves the intended aim and objects, since it allows to ensure the electrical connection between the coupling flanges with the connectors of the electrical wires despite being provided with an insulating plastic body.

An electrical junction box has in fact been provided which combines the advantages of plastic junction boxes and metal junction boxes of the background art.

With a single type of junction box - having a relatively low cost and relatively high simplicity in manufacture - electrical connection is allowed between the connectors of the electrical wires that lead to it.

The electrical junction box of the invention furthermore constitutes a valid alternative to known electrical junction boxes.

Not least, the electrical junction box described above gives the greatest assurances of reliability and safety in use.

The electrical junction box thus conceived is susceptible of numerous modifications and variations, all of which are within the scope of the appended claims.

Furthermore, all the details may be replaced with other technically equivalent elements.

In practice, the materials used, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electrical junction box (1), comprising:
- a box-like body (2) made of electrically insulating material,
- at least two coupling flanges (3) designed, during use, to be coupled to terminals for the coupling of electrical wires;
the electrical junction box (1) further comprises a connecting element (5, 6) that conducts electrical current, is extended between said flanges and connects them electrically, **characterized in that** the coupling flanges (3) are provided with a tubular coupling portion (7) that is threaded internally and said connecting element (5, 6) is extended at least close to said tubular coupling portion (7) in order to generate an electrical contact with a coupling terminal which, in the installed condition, is screwed into the tubular coupling portion (7), the connecting element (5, 6) having a body portion (10) and at least two ends (11, 12) that extend at said tubular coupling portion (7) in order to generate a radial electrical contact with a coupling terminal which, in the installed condition, is screwed into the tubular coupling portion (7), ends (11, 12) of the connecting element (5, 6) being in contact with the threads of the coupling portion (7).

2. The electrical junction box (1) according to claim 1, **characterized in that** said box-like body (2) comprises a bottom wall (8) and a wall (9) for covering the bottom wall, said covering wall (9) being electrically insulating and being arranged so as to be substantially coplanar and superimposed on the bottom wall (8) and in which the body portion (10) of the connecting element (5, 6) is interposed between the bottom wall (8) and the covering wall (9).

3. The electrical junction box (1) according to claim 1 or 2, **characterized in that** the threaded portion (7) is provided with an accommodation groove (18) which accommodates a corresponding end (11, 12) of the connecting element (5, 6).

4. The electrical junction box (1) according to one or more of the preceding claims, **characterized in that** the connecting element (5, 6) comprises an additional free terminal (13) at the body portion (10), said additional free terminal (13) protruding substantially at right angles from said body portion (10), extending within the volume of the box-like body (2), the covering wall (9) having, in a position that substantially coincides with the position of the additional free terminal (13), a passage opening.

5. The electrical junction box (1) according to claim 5, **characterized in that** the additional free terminal (13) is provided by cutting and bending a corresponding body portion (10), said body (10) having a window (19) with a shape and dimensions that are complementary to those of the additional free terminal (13) in order to provide a coupling with an underlying blocking protrusion (17) that protrudes from the bottom wall (8) toward the inside of the box-like body (2).

6. The electrical junction box (1) according to one or more of the preceding claims, **characterized in that** it comprises four coupling flanges (3) which are arranged in pairs so as to face each other, two connecting elements (5, 6) being provided, each extending between two mutually facing flanges (3), the two connecting elements (5, 6) being in mutual electrical contact.

7. The electrical junction box (1) according to one or more of the preceding claims, **characterized in that** the connecting element (5, 6) is co-molded with the body (2).

8. A combination of an electrical junction box (1) according to one or more of the preceding claims and of at least two electrical wires provided with coupling terminals adapted to couple to said flanges (3), said coupling terminals being at least partly electrically conducting, in particular conducting at least at one of their parts which, in the assembled condition, is in contact with a connecting element (5, 6) of the electrical junction box (1).

## Patentansprüche

1. Ein Stromverteilerkasten (1), der Folgendes umfasst:
- einen kastenartigen Körper (2) aus elektrisch isolierendem Material,
- mindestens zwei Kopplungsflansche (3), konstruiert, um während des Gebrauchs mit Klemmen für die Kopplung elektrischer Drähte gekoppelt zu sein;
der Stromverteilerkasten (1) umfasst weiter ein Verbindungselement (5, 6), das elektrischen Strom leitet, sich zwischen den Flanschen erstreckt und sie elektrisch verbindet; **dadurch gekennzeichnet, dass** die Kopplungsflansche (3) mit einem rohrförmigen Kopplungsabschnitt (7) ausgestattet sind, der ein Innengewinde hat, und das Verbindungselement (5, 6) sich mindestens nahe dem rohrförmigen Kopplungsabschnitt (7) erstreckt, um einen elektrischen Kontakt mit einer Kopplungsklemme herzustellen, welche im installierten Zustand in den rohrförmigen Kopplungsabschnitt (7) eingeschraubt ist; wobei das Verbindungselement (5, 6) einen Körperabschnitt (10) und mindestens zwei Enden (11, 12) hat, die sich an dem rohrförmigen Kopplungsabschnitt (7) erstrecken, um einen radialen elektrischen Kontakt mit einer Kopplungsklemme herzustellen, die im installierten Zustand in den rohrförmigen Kopplungsabschnitt (7) eingeschraubt ist; wobei Enden (11, 12) des Verbindungselements (5, 6) in Kontakt mit den Gewinden des Kopplungsabschnitts (7) stehen.

2. Der Stromverteilerkasten (1) gemäß Anspruch 1, **dadurch gekennzeichnet, dass** der kastenartige Körper (2) eine Bodenwand (8) und eine Wand (9) zur Abdeckung der Bodenwand umfasst; wobei die Abdeckwand (9) elektrisch isolierend und angeordnet ist, um im Wesentlichen koplanar mit der Bodenwand (8) und über sie gelegt zu sein; und wobei der Körperabschnitt (10) des Verbindungselements (5, 6) zwischen der Bodenwand (8) und der Abdeckwand (9) angeordnet ist.

3. Der Stromverteilerkasten (1) gemäß Anspruch 1 oder 2, **dadurch gekennzeichnet, dass** der Gewindeabschnitt (7) mit einer Aufnahmenut (18) ausgestattet ist, die ein entsprechendes Ende (11, 12) des Verbindungselements (5, 6) aufnimmt.

4. Der Stromverteilerkasten (1) gemäß einem oder mehreren der obigen Ansprüche, **dadurch gekennzeichnet, dass** das Verbindungselement (5, 6) eine zusätzliche freie Klemme (13) am Körperabschnitt (10) umfasst, wobei die zusätzliche freie Klemme (13) im Wesentlichen in rechten Winkeln von dem Körperabschnitt (10) vorsteht und sich innerhalb des Volumens des kastenartigen Körpers (2) erstreckt; wobei die Abdeckwand (9) an einer Position, die im Wesentlichen mit der Position der zusätzlichen freien Klemme (13) zusammenfällt, eine Durchgangsöffnung hat.

5. Der Stromverteilerkasten (1) gemäß Anspruch 5, **dadurch gekennzeichnet, dass** die zusätzliche freie Klemme (13) hergestellt wird durch Schneiden und Biegen eines entsprechenden Körperabschnitts (10), wobei der Körper (10) ein Fenster (19) mit einer Form und Abmessungen hat, die komplementär zu denjenigen der zusätzlichen freien Klemme (13) sind, um eine Kopplung mit einem darunter liegenden blockierenden Vorsprung (17) herzustellen, der von der Bodenwand (8) ins Innere des kastenartigen Körpers (2) hineinragt.

6. Der Stromverteilerkasten (1) gemäß einem oder mehreren der obigen Ansprüche, **dadurch gekennzeichnet, dass** er vier Kopplungsflansche (3) umfasst, die paarweise einander zugewandt angeordnet sind, wobei zwei Verbindungselemente (5, 6) bereitgestellt sind, die sich jeweils zwischen zwei einander zugewandten Flanschen (3) erstrecken, wobei die beiden Verbindungselemente (5, 6) in elektrischem Kontakt miteinander stehen.

7. Der Stromverteilerkasten (1) gemäß einem oder mehreren der obigen Ansprüche, **dadurch gekennzeichnet, dass** das Verbindungselement (5, 6) mit dem Körper (2) überformt ist.

8. Eine Kombination aus einem Stromverteilerkasten (1) gemäß einem oder mehreren der obigen Ansprüche und mindestens zwei elektrischen Drähten, ausgestattet mit Kopplungsklemmen, die zur Kopplung mit den Flanschen (3) ausgebildet sind, wobei die Kopplungsklemmen zumindest teilweise elektrisch leitend sind, insbesondere mindestens an einem ihrer Teile, welcher im montierten Zustand in Kontakt mit einem Verbindungselement (5, 6) des Stromverteilerkastens (1) steht.

## Revendications

1. Boîte de dérivation électrique (1), comprenant :
- un corps de type boîte (2) composé d'un matériau électriquement isolant,
- au moins deux brides d'accouplement (3) conçues, durant l'utilisation, pour être accouplées à des bornes pour l'accouplement de fils électriques ;
la boîte de dérivation électrique (1) comprend en outre un élément de connexion (5, 6) qui conduit le courant électrique, est étendu entre lesdites brides et connecte celles-ci électriquement, **caractérisée en ce que** les brides d'accouplement (3) sont pourvues d'une partie d'accouplement tubulaire (7) qui est intérieurement filetée et ledit élément de connexion (5, 6) est étendu au moins près de ladite partie d'accouplement tubulaire (7) afin de générer un contact électrique avec une borne d'accouplement qui, dans l'état installé, est vissée dans la partie d'accouplement tubulaire (7), l'élément de connexion (5, 6) comportant une partie corps (10) et au moins deux extrémités (11, 12) qui s'étendent au niveau de ladite partie d'accouplement tubulaire (7) afin de générer un contact électrique radial avec une borne d'accouplement qui, dans l'état installé, est vissée dans la partie d'accouplement tubulaire (7), les extrémités (11, 12) de l'élément de connexion (5, 6) étant en contact avec les filetages de la partie d'accouplement (7).

2. Boîte de dérivation électrique (1) selon la revendication 1, **caractérisée en ce que** ledit corps de type boîte (2) comprend une paroi de fond (8) et une paroi (9) pour recouvrir la paroi de fond, ladite paroi de couverture (9) étant électriquement isolante et étant agencée de manière à être sensiblement coplanaire et superposée sur la paroi de fond (8) et dans laquelle la partie corps (10) de l'élément de connexion (5, 6) est interposée entre la paroi de fond (8) et la paroi de couverture (9).

3. Boîte de dérivation électrique (1) selon la revendication 1 ou 2, **caractérisée en ce que** la partie filetée (7) est pourvue d'une rainure d'accueil (18) qui accueille une extrémité (11, 12) correspondante de l'élément de connexion (5, 6).

4. Boîte de dérivation électrique (1) selon une ou plusieurs des revendications précédentes, **caractérisée en ce que** l'élément de connexion (5, 6) comprend une borne libre supplémentaire (13) au niveau de la partie corps (10), ladite borne libre supplémentaire (13) faisant saillie sensiblement à angles droits depuis ladite partie corps (10), s'étendant dans le volume du corps de type boîte (2), la paroi de couverture (9) ayant, dans une position qui coïncide sensiblement avec la position de la borne libre supplémentaire (13), une ouverture de passage.

5. Boîte de dérivation électrique (1) selon la revendication 5, **caractérisée en ce que** la borne libre supplémentaire (13) est créée en découpant et pliant une partie corps (10) correspondante, ledit corps (10) ayant une fenêtre (19) ayant une forme et des dimensions qui sont complémentaires de celles de la borne libre supplémentaire (13) afin de fournir un accouplement avec une saillie de blocage sous-jacente (17) qui fait saillie depuis la paroi de fond (8) vers l'intérieur du corps de type boîte (2).

6. Boîte de dérivation électrique (1) selon une ou plusieurs des revendications précédentes, **caractérisée en ce qu'**elle comprend quatre brides d'accouplement (3) qui sont agencées par paires de manière à se faire mutuellement face, deux éléments de connexion (5, 6) étant prévus, chacun s'étendant entre deux brides (3) se faisant mutuellement face, les deux éléments de connexion (5, 6) étant en contact électrique mutuel.

7. Boîte de dérivation électrique (1) selon une ou plusieurs des revendications précédentes, **caractérisée en ce que** l'élément de connexion (5, 6) est co-moulé avec le corps (2).

8. Combinaison d'une boîte de dérivation électrique (1) selon une ou plusieurs des revendications précédentes et d'au moins deux fils électriques pourvus de bornes d'accouplement adaptées pour s'accoupler auxdites brides (3), lesdites bornes d'accouplement étant au moins partiellement électriquement conductrices, en particulier conductrices au moins au niveau de l'une de leurs pièces qui, dans l'état assemblé, est en contact avec un élément de connexion (5, 6) de la boîte de dérivation électrique (1).
